# EUROPEAN PATENT SPECIFICATION

(11) **EP 2 799 290 B1**
(45) Date of publication and mention of the grant of the patent: **02.11.2016**
(21) Application number: 13166222.3
(22) Date of filing: 02.05.2013
(51) Int. Cl.: B60R 21/00

(54) **Head restraint system**
Kopfrückhaltesystem
Système de retenue de tête

(43) Date of publication of application: 05.11.2014
(73) Proprietor: Volvo Car Corporation, 40531 Göteborg (SE)
(72) Inventor: Hardå, Peter, 42349 Torslanda (SE); Heurlin, Fredrik, 42353 Torslanda (SE)
(74) Representative: Volvo Car Corporation

(56) References cited:
- EP-A1- 1 452 406
- EP-A2- 1 632 407
- DE-A1- 2 159 407
- DE-A1- 19 615 096
- JP-A- 2010 083 384

## Description

### TECHNICAL FIELD

The present disclosure relates to an inflatable head restraint system comprising an inflatable airbag and a housing for storing the airbag in a packed condition. The disclosure further relates to a vehicle seat comprising such an inflatable head restraint system, a kit comprising the inflatable head restraint system and a transmitter, a vehicle, as well as a method for activating inflation of the airbag of the inflatable head restraint system.

### BACKGROUND

It is well known to use airbags in a vehicle in order to protect the occupants of the vehicle in case of a collision. Such airbags may be located in the steering wheel, in the dashboard or along the side rail above the side windows. The airbags may be inflated in case a collision detection system of the vehicle detects a collision and/or an imminent collision.

Document WO2007/050024 A1 discloses a system and a method for protecting the head of a user, e.g. a bicyclist, in case of an abnormal movement, such as a fall or a collision. The system comprises an apparel, an airbag, an inflator, and a trigger. The airbag is folded and arranged in the apparel before inflation. The apparel is arranged around the neck of the user, like for example a collar or a scarf. In an embodiment, the airbag is designed as a hood, which, in case of an abnormal movement is inflated to surround the neck and the head of the user in order to reduce the impact in order to protect the head of the user at impact with the ground, e.g. with asphalt or edged objects. The airbag of WO2007/050024 A1 hence has a similar function as a helmet: It will protect against head injury caused by physical impact with an external object such as the ground.

It is further since long known to use a seat belt in order to prevent a seat occupant from being thrown out of the seat. However, the seat belt will only work if the seat occupant has been previously buckled up, which however some seat occupants tend not do. In addition, even if the seat occupant has buckled up, the seat belt goes over the shoulder of the seat occupant and will not restrain the movement of what is above the shoulder, i.e. the neck and head of the user. EP1452406A1 discloses on figures 11(a) and 11(b) and on paragraph [0194] an inflatable head restraint system according to the preamble of claim 1. Document EP 1 632 407 A2 relates to an occupant safety system for especially private motor vehicles. The system comprises a front airbag and at least one additional head airbag forming a cushion section between the head of the occupant and seat headrest. The airbag system is controlled by signals delivered by sensors. With an impact action on the vehicle on the front end at least the front airbag is activated, and with an impact action on the vehicle from the rear and/or side the head airbag is activated.

Document JP 2010 083384 A relates to an occupant restraint system, which includes an airbag arranged inside a seat upper part and deployed sidewise in the vehicular interior side at the head of the occupant, and a strap with one end thereof fitted to the seat upper end, the other end thereof fitted to a seat lower part, and an intermediate part thereof fitted to a part forming a fore end when the airbag is deployed.

Document DE 2 159 407 relates to a personal safety device for protecting an occupant of a vehicle in the event of an accident. The device includes confining means, e.g. a net or cloth for retaining the occupant in close proximity to his seat, the confining means being normally in a gathered or folded condition adjacent to the occupant's seat. Gas generating means, e.g. a cylinder of compressed gas or a combustible chemical, is provided for projecting the confining means in front of the occupant and the device embodies means for drawing and tightening the confining means around the occupant's body. Operation of the device takes place automatically on detection by sensing means in the vehicle of an acceleration exceeding a predetermined magnitude.

### SUMMARY

The object of the present disclosure is to overcome or ameliorate at least one of the disadvantages of the prior art, or to provide a useful alternative.

It is desirable to provide a restraint system, which can restrain the movement of the head and/or the neck of a user of the head restraint system. The head restraint system may be used in conjunction with a seat belt system but may also be used independently of a seat belt system.

It is further desirable to provide a head restraint system having no need to be buckled up in order to function.

It is also desirable to provide a head restraint system, which will only occupy a small space of the passenger compartment when not in use.

The object above may be achieved by the subject-matter of claim 1.

Thus, in a first aspect of the present invention, there is provided an inflatable head restraint system comprising
- an inflatable airbag, and
- a housing for storing the airbag in a packed condition, wherein The housing is adapted to be located behind the back of a head and/or a nape of a user of the inflatable head restraint system. The airbag comprises a portion adapted to at least partly enclose the head, when the airbag is in an inflated state, thereby restraining movement of the head in a direction away from the housing.

The housing is located behind the head and/or the nape of the user, when in in use. The housing may be located directly behind the back of the head. Alternatively, the housing may be located obliquely in relation to the head, i.e. behind and above the head. Further, as another option, the housing may be located behind the nape of the user. The term nape is herein used to denote the back of the neck.

When needed, e.g. as detected by a sensor or by an activation signal being sent, the airbag is inflated to a state, where it is able to restrain the movement of the head in a direction away from the housing. The airbag may also, in addition, be used to protect the head from an impact with another object.

Purely as an example, if the head restraint system is used in a vehicle by a user facing forwards in the running direction of the vehicle, the head restraint system is able to restrain the forward movement of the head. In the same way, if the user faces backwards, the head restraint system is able to restrain the rearward movement of the head. In addition, the airbag may be used to protect the head from an impact with the vehicle interior, e.g. an inside of the A- , B- or C-pillar. If used in a vehicle, the housing is preferably attached in, at or to an object of the vehicle compartment, such as a back rest of a vehicle seat.

The head restraint system of the invention may be used in a vehicle, such as a car, lorry, truck or bus, a rail-bound vehicle, such as a train or tram, or in an aircraft.

The airbag may be arranged such that the portion of the airbag, which is adapted to at least partly enclose the head, encloses a part of a chin, a cheek and/or a forehead of the head of the user, when the airbag is in an inflated state, thereby restraining movement of the head in a direction away from the housing.

Preferably, the part of the head to enclose is selected having the position of the airbag relative to the head in mind, while also considering which movement of the head is desired to restrain.

The inflatable head restraint system may comprise at least one strap or fabric adapted to extend between the housing and the airbag, when the airbag is in an inflated state. The strap or fabric may extend between the housing and the portion of the airbag at least partly enclosing the head. The strap or fabric may itself at least partly enclose the head. The strap or fabric may e.g. enclose the cheek or the chin. Further, the strap or cloth may be used to guide the airbag during inflation and/or to keep the airbag in place, when it has been inflated. There may be one strap or cloth at either side of the inflated airbag. the strap or the cloth may be external, on the outside of the airbag, or internal, i.e. inside the airbag.

The housing may be shaped as a head rest of a vehicle seat. This is advantageous if the head restraint system is to be used in a vehicle, such as a car, lorry, truck or bus, a rail-bound vehicle, such as a train or tram, or in an aircraft. The housing of the head restraint system of the invention may be used instead of an ordinary head rest. It is thus possible to retrofit existing vehicles with the head restraint system according to the invention by replacing the head rest.

The inflatable head restraint system may further comprise
- an initiator for initiating inflation of the airbag,
- a receiver for wireless communication, the receiver being wiredly or wirelessly connected to the initiator, such that inflation of the airbag is initiated, when the receiver receives an activation signal.

The activation signal may be sent by a collision detection system of the vehicle, which system is arranged to detect an imminent and/or actual collision.

In a second aspect of the present invention, there is provided a vehicle seat comprising an inflatable head restraint system according to above.

The vehicle seat may comprise a sensor for activation, or an activation signal may be sent from a collision detection system of the vehicle. The activation signal may be sent wiredly or wirelessly.

The housing may be located behind an intended position of a head and/or a nape of a user of the vehicle seat, the airbag of the inflatable head restraint system being adapted to be inflated from the location behind the intended position of the head and/or the nape of the user. Behind relates to the case when the user is forward facing in the vehicle. If the user instead is facing rearwards, the head restraint system will be located in front of the user, when seen in relation to the main running direction of the vehicle.

The housing of the airbag may be integrated into a back rest of the vehicle seat. Thereby it is practically stowed away when not inflated. The housing may be inserted into the back rest, such that its surface is flush with the surface of the rest of the back rest.

The housing of the airbag may form a head rest, which forms part of the vehicle seat. The housing of the head restraint system of the invention may be used instead of an ordinary head rest. It is thus possible to retrofit existing vehicles with the head restraint system according to the invention by replacing the ordinary head rest.

A position of the housing may be adjustable in relation to the back rest of the vehicle seat, e.g. by the housing comprising at least one post, preferably two posts, which is/are linearly displaceable in relation to the back rest by linear displacement in a corresponding receiving channel in the back rest. Thereby, the height position of the housing is easily adjustable. The height adjustment of the housing may be performed in a way used for an ordinary head rest.

The vehicle seat according to the second aspect of the invention may be a detachable seat, e.g. a child seat.

The volume of the inflated airbag depends on the configuration of the airbag, and where in the vehicle it is intended to be mounted. Purely as an example, an airbag for a child seat may comprise a volume of between 2 and 8 liters when inflated, while an airbag for a headrest intended to be mounted at an ordinary vehicle seat may comprise between 3 and 12 liters.

The lower portion of the volume ranges represents an embodiment, wherein the head restraint system comprises at least one fabric or strap in addition to the inflatable airbag. The inflatable airbag may in that case be used to form an inflatable airbag-tube skeleton of the head restraint system having fabrics or straps in between the airbag tubes. In that case, an airbag for a child seat may comprise a volume of between 2 and 4 liters when inflated, while an airbag for a headrest intended to be mounted at an ordinary vehicle seat may comprise between 3 and 8 liters, preferably between 3 and 5 liters.

In a third aspect of the present invention, there is provided a kit comprising
- an inflatable head restraint system according to above, and
- a transmitter being adapted for wireless communication with the receiver being connected to the initiator, the transmitter being adapted to be directly or indirectly connected to a collision detection system of a vehicle. The collision detection system of
the vehicle may be arranged to detect an imminent and/or actual collision involving the vehicle.

The head restraint system may make use of the collision detection system of the vehicle, such that the collision detection system of the vehicle may replace, or complement, a sensor system located in the head restraint system or the vehicle seat. This may be advantageous, if the vehicle seat comprising the inflatable head restraint system is detachable.

If using a collision detection system, or a sensor system, arranged to detect an imminent collision, there will be a longer time period available for the inflatable airbag to deploy. A less rapid deployment of the airbag may be advantageous in order to reduce, or avoid, the risk of secondary injury to the user caused by the deploying airbag. There may also be time to first place the user in a favourable position before deploying the airbag first, e.g. by pre-tensioning of a seat belt. On the other hand, if detecting an imminent collision, there is a prediction involved that a collision will occur. Therefore, there is a risk that the prediction is wrong and the airbag unnecessarily deployed, although no collision actually happened. Once deployed, the airbag has to be replaced to restore the head restraint system, which will cause some cost and effort.

On, the other hand, if using a collision detection system, or a sensor system, arranged to detect an actual collision, the risk of deploying an airbag unnecessarily is reduced. However the airbag will be deployed in a more rapid way, as compared to if an imminent collision is detected.

Further, a collision detection system, or a sensor system, adapted to detect both an imminent and an actual collision may be used. For example, if the prediction has a high certainty, the airbag may be deployed based on the predicted collision. On the other hand, if the prediction has a low certainty, the system may instead wait until an actual collision is detected.

The kit may further comprise a detachable child seat, the inflatable head restraint system being comprised in the child seat. The inflatable head restraint system may be integrated into the back rest of the child seat or the housing may be shaped as a head rest, which optionally is height adjustable.

In a fourth aspect of the present invention, there is provided a vehicle comprising a collision detection system for detection of a collision and an inflatable head restraint system according to above. The vehicle may comprise the vehicle seat according to above or the kit according to above.

In a fifth aspect of the present invention, there is provided a method for activating inflation of an airbag of an inflatable head restraint system according to above, the method comprising
- detecting a collision by means of a collision detection system of a vehicle,
- transmitting an activation signal for the airbag,
- activate inflation of the airbag, when the activation signal is received.

The activation signal may be wirelessly transmitted between the collision detection system and the inflatable head restraint system, e.g.by means of radio waves. If using wireless transmission there is no need to electronically connect the head restraint system to the collision detection system of the vehicle. This is convenient if the vehicle seat comprising the head restraint system is detachable, such as the child seat, or if the head restraint system is incorporated in a head rest, as described above.

In a sixth aspect of the present invention there is provided a use of an inflatable head restraint system comprising an inflatable airbag, and a housing in order to restrain movement of the head of a user of the inflatable head restraint system in a direction away from the housing.

If used in a vehicle seat, the use comprises restraining the movement of the head in a direction away from the vehicle seat.

### BRIEF DESCRIPTION OF THE DRAWINGS

The present invention will hereinafter be further explained by means of non-limiting examples with reference to the appended drawings wherein:
- Fig. 1: is a schematic view of a vehicle seat equipped with an inflatable head restraint system according to a first embodiment of the invention,
- Fig. 2: is a schematic view of a child seat equipped with an inflatable head restraint system according to a second embodiment of the invention,
- Fig. 3: illustrates the child seat of Fig. 2 with an inflated airbag,
- Fig. 4a: and b illustrate how to adjust the height of the head restraint system,
- Fig. 5: illustrates a prior art child seat,
- Fig. 6: illustrates the prior art child seat of Fig. 5 in case of collision,
- Fig. 7: illustrates a child seat according to a third embodiment of the invention,
- Fig. 8: illustrates the child seat of Fig. 7 in case of collision,
- Fig. 9: illustrates a child seat according to a fourth embodiment of the invention,
- Fig. 10: illustrates the child seat of Fig. 7 in a perspective view,
- Fig. 11: illustrates the child seat of Fig. 10 with the head restraint system removed,
- Fig. 12: illustrates an integrated head restraint system,
- Fig. 13: illustrates a vehicle according to the invention, and
- Fig. 14: illustrates a method according to the invention.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

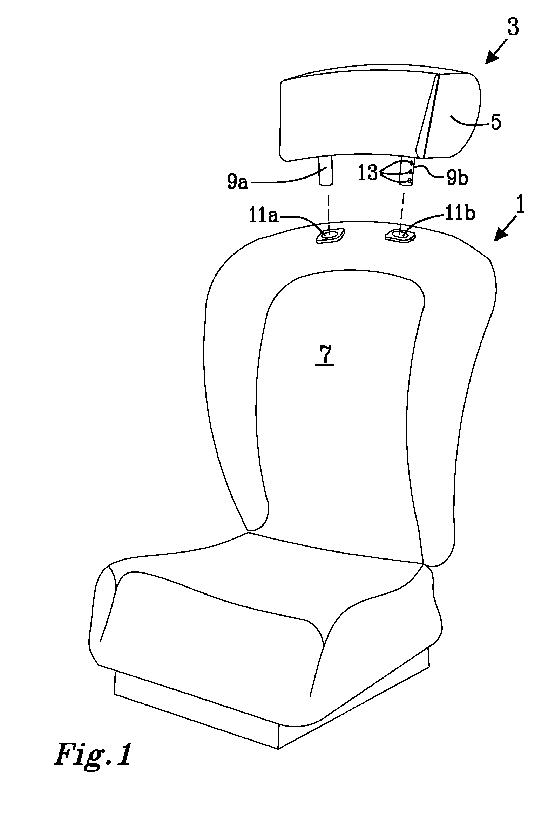

Figure 1 schematically illustrates a vehicle seat 1 equipped with an inflatable head restraint system 3 according to a first embodiment of the invention. The head restraint system 3 comprises an inflatable airbag and a housing 5 for storing the airbag. The airbag cannot be seen in Figure 1, since it is stored in the housing 5. The housing 5 forms a head rest of the vehicle seat 1. The housing 5 of the head restraint system 3 of the invention may be used instead of an ordinary head rest. It is thus possible to retrofit existing vehicles with the head restraint system according to the invention by replacing the ordinary head rest.

The head restraint system 3, with the housing 5 being used as a head rest, may be attached to a back rest 7 of the vehicle seat 1 in a number of ways known by the skilled person for attaching ordinary head rests. Purely as an example, as illustrated by Figure 1, the housing 5 may comprise two posts 9a, 9b, which are linearly displaceable in relation to the back rest 7 by linear displacement in a corresponding receiving channel 11 a, 11 b in the back rest 7. Thereby, the height of the head rest is adjustable. The posts 9a, 9b may be provided with holes or notches 13 offering a plurality of predefined positions of the housing 5 in relation to the back rest 7. As an option, it may be possible to adjust the distance between the posts 9a, 9b in order to be able to use the housing 5 in different vehicle seats having different receiving channels 11 a, 11 b.

In case of a collision, the head restraint system 3 will deploy in a similar way as described below for the second embodiment.

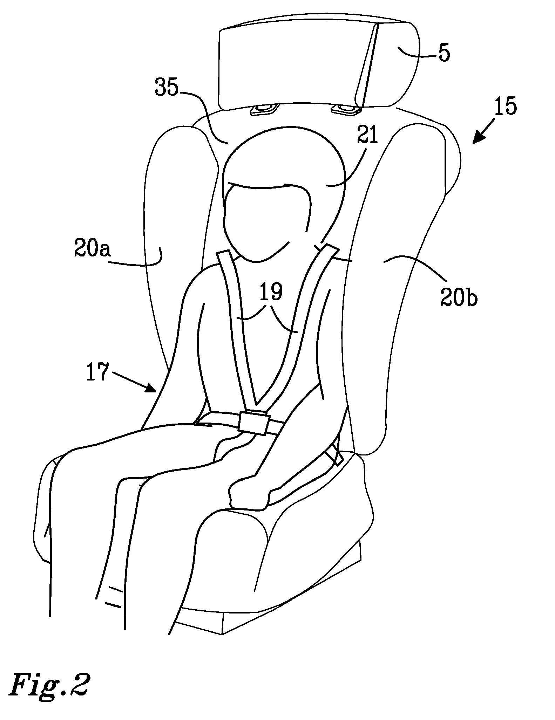

Figure 2 illustrates a second embodiment of the invention. In this case the housing 5 forms a head rest of a child seat 15. The child seat 15 is detachable from the vehicle. It is intended to be placed on top of an ordinary vehicle seat. The child seat 15 may be placed either forwards or backwards, i.e. a child 17 sitting in the child seat 15, may face forwards or backwards. The child seat 15 comprises a seat belt arrangement 19, which is adapted to restrain the movement of the body of the child 17 in relation to the child seat 15. The seat belt arrangement 19 fixes the position of the shoulders of the child 17 in relation to the child seat 15. The seat belt arrangement 19 is however not be adapted to restrain the movement of the head 21 of the child 17. The child seat 15 further comprises side panels 20a, 20b at either side of a back rest 35.

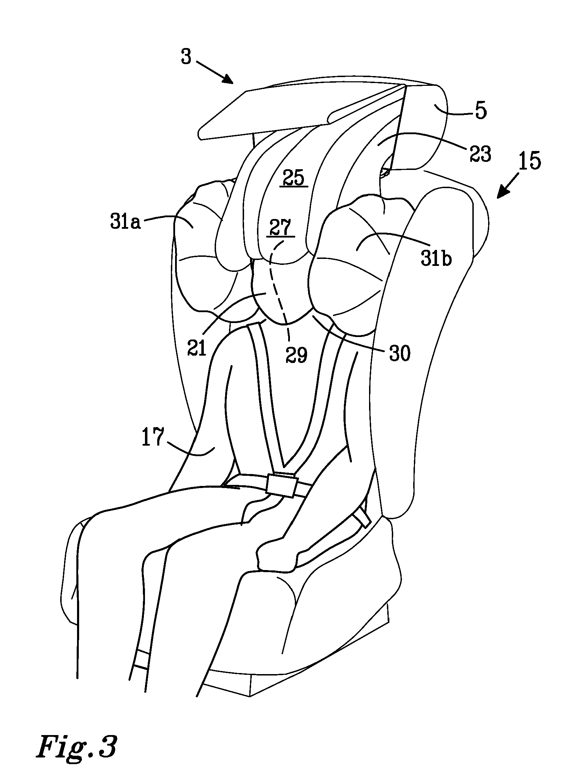

In case of a collision, as is illustrated in Figure 3, an airbag 23 will be deployed from the housing 5. The housing 5 is located behind and above, the head 21 of the child 17. The airbag 23 inflates along a path passing over the head 21 of the child 17, first inflating a first portion 25 intended to cover the skull of the child 17 and thereafter inflating a second portion 27 adapted to at least partly enclose a forehead 29 of the child 17. By enclosing the forehead 29, the inflated airbag 23 is capable of restraining the movement of the head 21 in a direction away from the housing 5. Therefore, in case of a forward facing child seat 15, the head restraint system 3 will be able to prevent the head 21 from being thrown forwards, e.g. in case of a collision with a meeting vehicle or a still-standing object. In a similar way, in case of a rearward facing child seat 15, the head restraint system 3 will be able to prevent the head 21 from being thrown backwards, e.g. in case of a collision from behind. The head restraint system 3 is adapted to restrain the movement of what is above the shoulder, i.e. a neck, a nape 30 and the head 21.

The child seat 15 may in addition comprise a side airbag 31 a, 31 b, which may be inflated in case of a side collision of the vehicle. The side airbag 31 a, 31 b may be inflated at both sides of the head 21 or at only the side towards which the head 21 is thrown by the impact of the side collision. If the vehicle is impacted at an oblique angle, the head restraint system 3 of the invention may be used in combination with one or both of the side airbags 31a,31b.

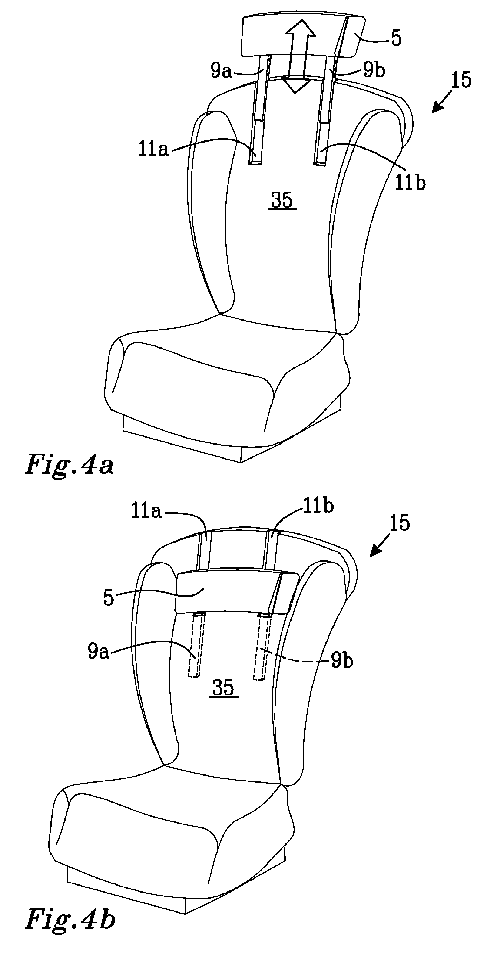

In order to adapt the child seat 15 to different sizes of the child 17, the housing 5 may be arranged to be positioned at a selectable height in relation to the back rest 35 of the child seat 15. The housing 5 may then be positioned at a height corresponding to the head 21 of the child, i.e. high for a large child, like the child 17 of Figure 3, see Figure 4a, and low for a small child, see Figure 4b.

In order to be able to adjust the height of the housing 5, it comprises two posts 9a, 9b, which are linearly displaceable in relation to the back rest 35 by linear displacement in two corresponding receiving channels 11 a, 11 b in the back rest 35. As an option, it may be possible to adjust the distance between the posts 9a, 9b in order to be able to use the housing 5 in different child seats 15 having different receiving channels 11 a, 11 b. The height adjustment of the housing 5 may be performed automatically, e.g. by means of a sensor for determining the position of the head 21 of the child 17 and an actuator for positioning the housing 5 according to the determined position. The actuator may e.g. move the housing 5 by means of an electric motor up and down in rails or in the channels 11a, 11b.

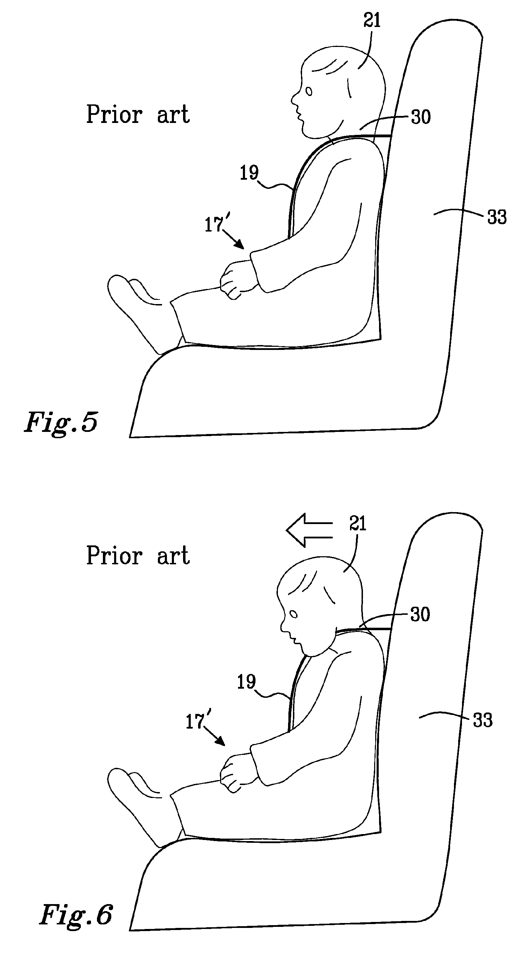

Figure 5 illustrates a child seat 33 according to prior art. A small child 17' is seated in the child seat 15. The prior art child seat 33 comprises a seat belt arrangement 19, similar to the one described for Figure 2. In case of a collision, e.g. a frontal collision for a forward facing prior art child seat 33, or a collision from behind for a rearwards facing prior art child seat, the seat belt arrangement 19 will restrain the movement of the body of the child 17', while the head 21 is thrown in a direction away from the child seat 33, i.e. forward or backwards, respectively. See Figure 6. There is thus a risk of injury to the nape30 and/or head 21 of the child 17'.

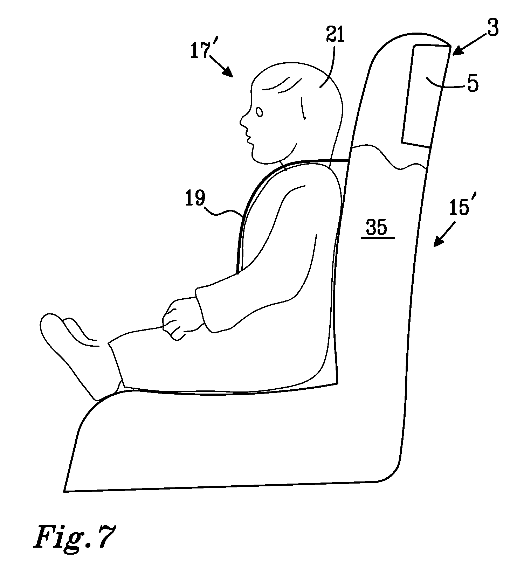

As a comparison, Figure 7 illustrates a child seat 15' with a head restraint system 3 according to a third embodiment of the invention. The head restraint system 3 forms an integral part of a back side of the back rest 35 of the child seat 15'. The housing 5 of the head restraint system 3 is located behind the back of the head 21 of the child 17'. The child seat 15' further comprises the seat belt arrangement 19, which is described above.

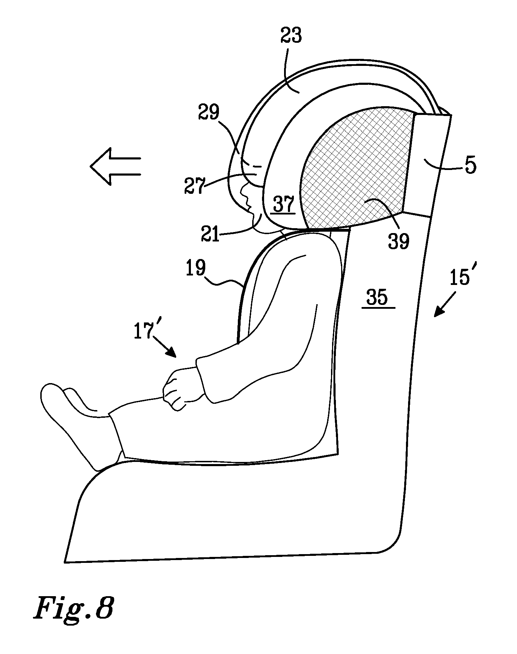

In case of a collision, e.g. a frontal collision for a forward facing child seat 15', or a collision from behind for a rearwards facing child seat, the seat belt arrangement 19 will restrain the movement of the body of the child 17'. Further, the airbag 23 of the head restraint system 3 according to the invention is inflated. In its inflated state, the airbag 23 restrains the head 21 from being thrown in a direction away from the backrest 35. See Figure 8. This minimizes the risk of injury to the nape 30 and/or the head 21 of the child 17' or at least minimizes the damage, as compared to if no head restraint system 3 is used, as in the prior art child seat of Figure 6.

In the first phase of inflation of the airbag 23, it inflates upwards from the position of the housing 5 at the back side of the back rest 35 of the child seat 15'. It then follows a path in a longitudinal direction away from the backrest 35 and develops the first portion 25 intended to cover the skull of the child 17'. In a final phase of inflation, the airbag develops the second portion 27 enclosing the forehead 29 and a third portion 37 enclosing a cheek of the child 17'.

The airbag may further comprise a strap or a cloth extending between the housing 5 and the airbag 23, in Figure 8 illustrated as a cloth 39 partly enclosing the cheek of the child 17'. The strap or cloth 39 is used to guide the airbag 23 during inflation and/or to keep the airbag 23 in place, when it has been inflated.

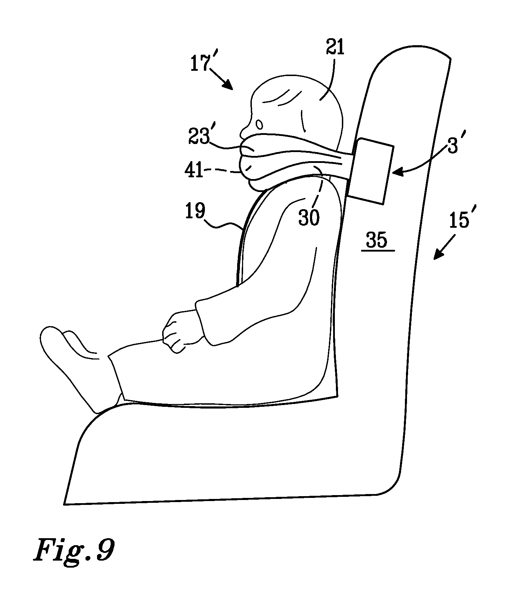

Figure 9 illustrates a child seat 15' with a head restraint system 3' according to a fourth embodiment of the invention. When stored, the head restraint system 3' forms an integral part of the back rest 35 of the child seat 15' having a surface which is flush with the rest of the back rest 35. The housing 5' is located in the back rest 35 behind the nape 30 of the child 17'. Preferably two housings 5' are used, one at either side of the nape 30. The child seat 15' may further comprise the seat belt arrangement 19, which is described above. The head restraint system 3' of the fourth embodiment, illustrated in Figure 9, differs from that of the third embodiment, illustrated in Figures 7 and 8, in that the airbag 23' is inflated from the height of the nape 30 and in that the airbag 23' in the first phase is substantially deployed in a longitudinal direction away from the housing 5', such that the airbag 23' when inflated at least partly encloses a chin 41 of the child 17', thereby preventing the head 21 from being thrown in a direction away from the back rest 35. In addition, the airbag 23' will protect the head 21, the neck and/or the nape 30, if there is a side collision.

If desired, the airbag 23 of the third embodiment may be used in combination with one, or preferably two of the airbags 23' of the fourth embodiment.

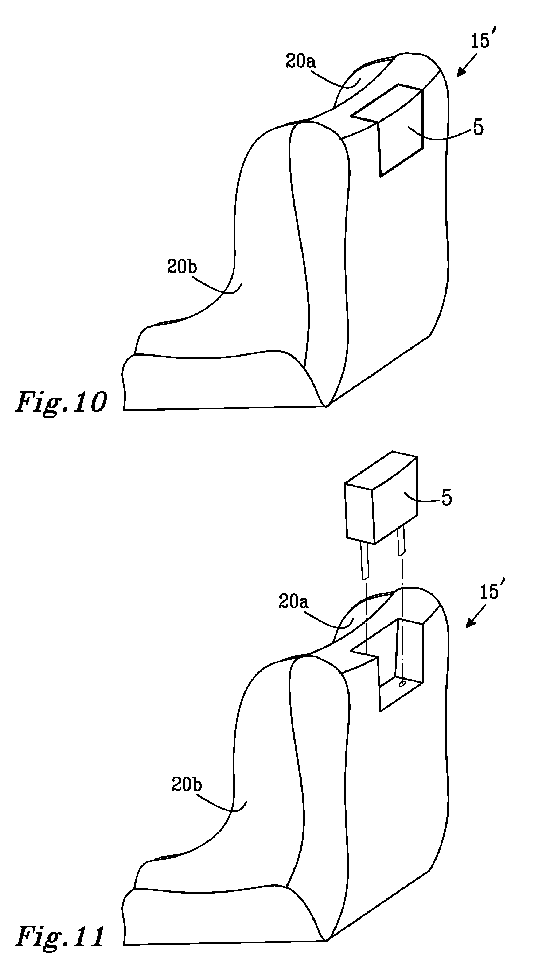

The housing 5 of the head restraint system 3' may form a part of the back rest 35 of the child seat as illustrated in Figure 10 showing a perspective view of the child seat 15'. The child seat 15' may comprise side panels, whereof one 20b is visible. The housing 5 may be detachable from the back rest 35, as illustrated in Figure 11.

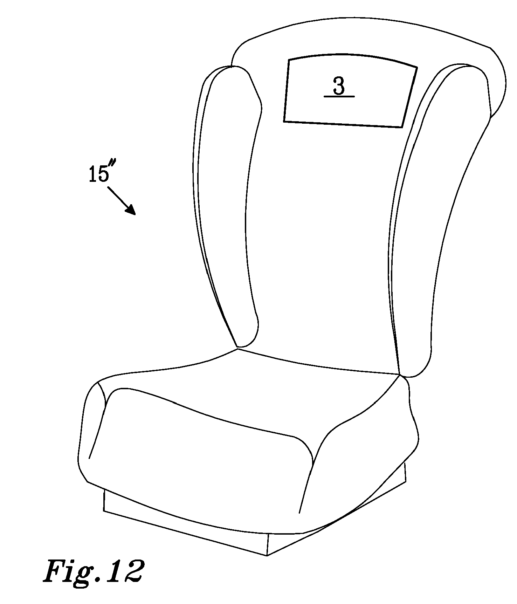

As an alternative, the housing of the inflatable head restraint system 3 may form an integral part of the back rest 35, as illustrated in the child seat 15" of Figure 12. The housing may have a surface which is flush with the rest of the back rest 35.

The housing 5' may be arranged such that the airbag 23, 23' in a first phase inflates substantially in a longitudinal direction over the head 21, as would be the case for the child seat 15 of Figure 3 or the child seat 15" of Figure 12. Alternatively, the airbag 23, 23' may 23' in a first phase inflate substantially upwards and thereafter in a longitudinal direction over the head 21, as illustrated for the child seat 15' of Figure 8. Further, the airbag 23' may in a first phase inflate substantially in a longitudinal direction at the side of the head 21, as illustrated for the child seat 15' of Figure 9.

If the head restraint system 3 is attached to the vehicle seat 1, the airbag 23 may deploy in any of the above-mentioned ways. It would further be feasible, but is not illustrated in the Figures, that the airbag first inflates backwards out from the back rest, then upwards, and thereafter forwards over the head.

The volume of the inflated airbag depends on the configuration of the airbag 23, 23' and where in the vehicle it is intended to be mounted. Purely as an example, an airbag 23, 23' for a child seat 15, like the ones of Figures 3, 8 and 9, may comprise a volume of between 2 and 8 liters when inflated, while an airbag for a headrest intended to be mounted at an ordinary vehicle seat 7, like the one of Figure 1, may comprise between 3 and 12 liters.

The lower portion of the volume ranges represents an embodiment, wherein the head restraint system 3 comprises at least one fabric or strap in addition to the inflatable airbag 23, e.g. as in Figure 8. The inflatable airbag may in that case be used to form an inflatable airbag-tube skeleton of the head restraint system having fabrics or straps in between the airbag tubes. In that case, an airbag for a child seat 15, 15', 15" may comprise a volume of between 2 and 4 liters when inflated, while an airbag for a headrest intended to be mounted at an ordinary vehicle seat 1 may comprise between 3 and 8 liters, preferably between 3 and 5 liters.

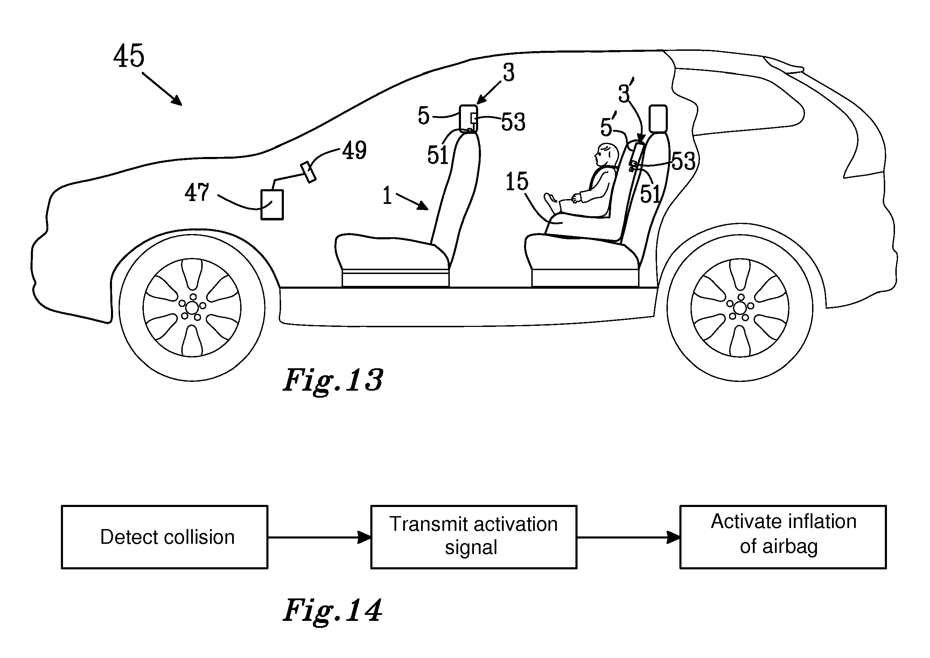

Figure 13 illustrates a vehicle 45 according to the invention. The vehicle 45 comprises the vehicle seat 1 with a head restraint system 3 as described above. There is also another vehicle seat in the form of a detachable child seat 15 with a head restraint system 3 as also is described above. It would also be possible to use either the vehicle seat 1 or the child seat 15. The vehicle 45 further comprises a collision detection system 47. A transmitter 49 is connected to the collision detection system 47. In case the collision detection system 47 determines that the airbag should be inflated, an activation signal is sent by the transmitter 49. The activation signal may e.g. be sent when the collision detection system 47 determines that an airbag located in the steering wheel and/or an airbag in the dashboard and/or a seat belt pretensioner should be activated. The connection for an initiator of the airbag located in the steering wheel is in modern vehicles standardized having a standardized interface, such that equipment from different suppliers may be connected to each other. The standardized interface may also be used to connect the transmitter 49. The collision detection system 47 may be adapted to detect an imminent collision and/or to detect an actual collision.

The head restraint system 3, 3' may further comprise a receiver 51 for receiving the activation signal. The receiver 51 is connected to an initiator 53, which is adapted to initiate the inflation of the airbag of the head restraint system 3, 3', when it receives the activation signal. The activation signal may be wiredly or wirelessly transmitted from the transmitter 49.

If using wireless transmission, there is no need to electronically connect the head restraint system 3, 3' to the collision detection system 47 of the vehicle 45. This is convenient if the vehicle seat is detachable, such as the child seat 15, 15' 15" or if the head restraint system 3 is incorporated in a head rest for a vehicle seat 1.

As an alternative, or as a complement, the head restraint system 3, 3' may itself comprise an activation sensor, which e.g. is adapted to detect sudden changes of motion. The sensor may determine acceleration and/or angular change, e.g. linear acceleration and/or angular velocity.

A method for activating inflation of an airbag of an inflatable head restraint system could look like in Figure 14, comprising the steps of
a) detecting a collision by means of a collision detection system of a vehicle and/or a sensor system connected to the head restraint system,
b) transmitting an activation signal for the airbag,
c) activating inflation of the airbag, when the activation signal is received.

As mentioned above, the activation signal may be wiredly or wirelessly transmitted. The activation signal may also be used to activate other restraint means of the vehicle seat 1 or the child seat 15, such as a pretensioner of the seat belt arrangement 19.

Before activating inflation of the airbag, there may be a step of
b2) determining the position of a head 21 of the seat occupant.
Step c) may in that case only be performed if the head 21 is in an appropriate position.

If the head 21 is in an inappropriate position, e.g. the seat occupant leaning forwards or to the side, it may be better from a safety point of view not to inflate the airbag.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. An inflatable head restraint system (3, 3') comprising
- an inflatable airbag (23,23'), and
- a housing (5) for storing said airbag (23, 23') in a packed condition,
said housing (5) is adapted to be located behind the back of a head (21) and/or a nape (30) of a user of said inflatable head restraint system (3, 3'), and
said airbag (23, 23') comprises a portion (27, 37) adapted to at least partly enclose said head, when said airbag (23, 23') is in an inflated state, thereby restraining movement of said head (21) in a direction away from said housing (5),
said head restraint system (3, 3') is adapted to restrain the forward movement of said head, if said user faces forwards, and to restrain the rearward movement of said head, if said user faces backwards,
said housing (5) is adapted to be integrated into a back rest (35) of a vehicle seat (15', 15") or said housing (5) forms a head rest adapted to form part of a vehicle seat (1, 15), **characterized in that** said airbag (23, 23') is adapted to inflate along a path passing over said head (21).

2. The inflatable head restraint system (3') according to claim 1, wherein said portion of said airbag (23') is adapted to at least partly enclose a chin (41), a cheek and/or a forehead (29) of said head (21) of said user, when said airbag (23') is in an inflated state, thereby restraining movement of said head (21) in a direction away from said housing (5).

3. The inflatable head restraint system (3, 3') according to any one of the preceding claims, wherein said inflatable head restraint system (3, 3') comprises at least one strap or fabric (39) adapted to extend between said housing (5) and said airbag (23, 23'), when said airbag (23, 23') is in an inflated state.

4. The inflatable head restraint system (3, 3') according to any one of the preceding claims, wherein said housing (5) is shaped as a head rest of a vehicle seat (1, 15, 15', 15").

5. The inflatable head restraint system (3, 3') according to any one of the preceding claims, wherein said inflatable head restraint system (3, 3') further comprises
- an initiator (53) for initiating inflation of said airbag (23, 23'),
- a receiver (51) for wireless communication, said receiver (51) being wiredly or wirelessly connected to said initiator (53), such that inflation of said airbag (23, 23') is initiated, when said receiver (51) receives an activation signal.

6. A vehicle seat (1, 15, 15', 15") comprising an inflatable head restraint system (3, 3') according to any one of the preceding claims, wherein said housing (5) is located behind an intended position of a head (21) and/or a nape (30) of a user of said vehicle seat (1, 15, 15', 15"), said airbag (23,23') of said inflatable head restraint system (3,3') being adapted to be inflated from said location behind said intended position of said head (21) and/or nape (30) of said user,
wherein the housing (5) of said airbag (23, 23') is integrated into a back rest (7, 35) of said vehicle seat (15', 15") or the housing (5) of said airbag (23, 23') forms a head rest, which forms part of said vehicle seat (1, 15), said airbag (23, 23') being adapted to inflate along a path passing over said head (21).

7. The vehicle seat according to claim 6, wherein a position of said housing (5) is adjustable in relation to a back rest (7, 35) comprised in said vehicle seat (1, 15), e.g. by said housing (5) comprising at least one post (9a, 9b), preferably two posts (9a, 9b), which is/are linearly displaceable in relation to said back rest (7, 35) by linear displacement in a corresponding receiving channel (11a, 11b) in said back rest (7, 35).

8. The vehicle seat according to any one of claims 6-7, wherein said vehicle seat is a detachable seat, e.g. a child seat (15, 15', 15").

9. A kit comprising
- an inflatable head restraint system (3, 3') according to claim 5, and
- a transmitter (49) being adapted for wireless communication with said receiver (51) being connected to said initiator (53), said transmitter (49) being adapted to be directly or indirectly connected to a collision detection system (47) of a vehicle (45).

10. The kit according to claim 9, wherein the kit further comprises a detachable child seat (15, 15', 15"), said inflatable head restraint system (3, 3') being comprised in said child seat (15, 15', 15").

11. A vehicle (45) comprising a collision detection system (47) for detection of a collision, and the vehicle (45) further comprising an inflatable head restraint system (3, 3') according to any one of claims 1-5, a vehicle seat (1, 15, 15', 15") according to any of claims 6-8 or a kit according to claim 9 or 10.

12. A method for activating inflation of an airbag (23, 23') of an inflatable head restraint system (3, 3') according to any of claims 1-5, said method comprising
- detecting a collision by means of a collision detection system (47) of a vehicle (45),
- transmitting an activation signal for said airbag (23, 23'),
- activate inflation of said airbag (23, 23'), when said activation signal is received.

13. The method according to claim 12, wherein said activation signal is wirelessly transmitted between said collision detection system (47) and said inflatable head restraint system (3, 3').

## Patentansprüche

1. Aufblasbares Kopfrückhaltesystem (3, 3'), das Folgendes umfasst:
- einen aufblasbaren Luftsack (23, 23'), und
- ein Gehäuse (5) zum Aufbewahren des Luftsacks (23, 23') in einem gepackten Zustand,
wobei das Gehäuse (5) ausgelegt ist, hinter der Rückseite des Kopfes (21) und/oder hinter dem Genick (30) eines Nutzers des aufblasbaren Kopfrückhaltesystems (3, 3') angeordnet zu sein, und wobei der Luftsack (23, 23') einen Abschnitt (27, 37) umfasst, der ausgelegt ist, den Kopf zumindest teilweise zu umschließen, wenn sich der Luftsack (23, 23') in einem aufgeblasenen Zustand befindet, wodurch er die Bewegung des Kopfes (21) in einer Richtung vom Gehäuse (5) weg einschränkt, wobei das Kopfrückhaltesystem (3, 3') ausgelegt ist, die Vorwärtsbewegung des Kopfes einzuschränken, wenn der Nutzer nach vorne sieht, und die Rückwärtsbewegung des Kopfes einzuschränken, wenn der Nutzer nach hinten sieht,
wobei das Gehäuse (5) ausgelegt ist, in eine Rückenlehne (35) eines Fahrzeugsitzes (15', 15") integriert zu sein, oder wobei das Gehäuse (5) eine Kopfstütze bildet, die ausgelegt ist, einen Teil eines Fahrzeugsitzes (1, 15) zu bilden, **dadurch gekennzeichnet, dass** der Luftsack (23, 23') ausgelegt ist, sich entlang eines Weges aufzublasen, der über den Kopf (21) führt.

2. Aufblasbares Kopfrückhaltesystem (3') nach Anspruch 1, wobei der Abschnitt des Luftsacks (23') ausgelegt ist, zumindest teilweise ein Kinn (41), eine Wange und/oder eine Stirn (29) des Kopfes (21) des Nutzers zu umschließen, wenn sich der Luftsack (23') in einem aufgeblasenen Zustand befindet, wodurch er die Bewegung des Kopfes (21) in einer Richtung vom Gehäuse (5) weg einschränkt.

3. Aufblasbares Kopfrückhaltesystem (3, 3') nach einem der vorhergehenden Ansprüche, wobei das aufblasbare Kopfrückhaltesystem (3, 3') mindestens einen Riemen oder einen Stoff (39) umfasst, der ausgelegt ist, sich zwischen dem Gehäuse (5) und dem Luftsack (23, 23') zu erstrecken, wenn sich der Luftsack (23, 23') in einem aufgeblasenen Zustand befindet.

4. Aufblasbares Kopfrückhaltesystem (3, 3') nach einem der vorhergehenden Ansprüche, wobei das Gehäuse (5) als eine Kopfstütze eines Fahrzeugsitzes (1, 15, 15', 15") geformt ist.

5. Aufblasbares Kopfrückhaltesystem (3, 3') nach einem der vorhergehenden Ansprüche, wobei das aufblasbare Kopfrückhaltesystem (3, 3') ferner Folgendes umfasst:
- eine Auslöseeinrichtung (53) zum Auslösen des Aufblasens des Luftsacks (23, 23'),
- einen Empfänger (51) zur drahtlosen Kommunikation, wobei der Empfänger (51) drahtgebunden oder drahtlos mit der Auslöseeinrichtung (53) derart verbunden ist, dass das Aufblasen des Luftsacks (23, 23') ausgelöst wird, wenn der Empfänger (51) ein Aktivierungssignal empfängt.

6. Fahrzeugsitz (1, 15, 15', 15"), der ein aufblasbares Kopfrückhaltesystem (3, 3') nach einem der vorhergehenden Ansprüche umfasst, wobei das Gehäuse (5) hinter einer vorgegebenen Position des Kopfes (21) und/oder des Genicks (30) eines Nutzers des Fahrzeugsitzes (1, 15, 15', 15") angeordnet ist, wobei der Luftsack (23, 23') des aufblasbaren Kopfrückhaltesystems (3, 3') ausgelegt ist, aus dem Ort hinter der vorgegebenen Position des Kopfes (21) und/oder des Genicks (30) des Nutzers aufgeblasen zu werden,
wobei das Gehäuse (5) des Luftsacks (23, 23') in eine Rückenlehne (7, 35) des Fahrzeugsitzes (15', 15") integriert ist oder wobei das Gehäuse (5) des Luftsacks (23, 23') eine Kopfstütze bildet, die einen Teil des Fahrzeugsitzes (1, 15) bildet, wobei der Luftsack (23, 23') ausgelegt ist, sich entlang eines Weges aufzublasen, der über den Kopf (21) führt.

7. Fahrzeugsitz nach Anspruch 6, wobei eine Position des Gehäuses (5) in Relation zu einer Rückenlehne (7, 35), die in dem Fahrzeugsitz (1, 15) enthalten ist, einstellbar ist, z. B. indem das Gehäuse (5) mindestens eine Stütze (9a, 9b), vorzugsweise zwei Stützen (9a, 9b), umfasst, die durch eine geradlinige Verschiebung in einem entsprechenden Aufnahmekanal (11a, 11b) in der Rückenlehne (7, 35) in Relation zur Rückenlehne (7, 35) geradlinig verschiebbar ist/sind.

8. Fahrzeugsitz nach einem der Ansprüche 6-7, wobei der Fahrzeugsitz ein herausnehmbarer Sitz, z. B. ein Kindersitz (15, 15', 15"), ist.

9. Ausrüstung, die Folgendes umfasst:
- ein aufblasbares Kopfrückhaltesystem (3, 3') nach Anspruch 5, und
- eine Übertragungseinheit (49), die zur drahtlosen Kommunikation mit dem Empfänger (51), der mit der Auslöseeinrichtung (53) verbunden ist, ausgelegt ist, wobei die Übertragungseinheit (49) ausgelegt ist, direkt oder indirekt mit einem Kollisionsdetektionssystem (47) eines Fahrzeugs (45) verbunden zu sein.

10. Ausrüstung nach Anspruch 9, wobei die Ausrüstung ferner einen abnehmbaren Kindersitz (15, 15', 15") umfasst, wobei das aufblasbare Kopfrückhaltesystem (3, 3') in dem Kindersitz (15, 15', 15") enthalten ist.

11. Fahrzeug (45), das ein Kollisionsdetektionssystem (47) zur Detektion einer Kollision umfasst, wobei das Fahrzeug (45) ferner ein aufblasbares Kopfrückhaltesystem (3, 3') nach einem der Ansprüche 1-5, einen Fahrzeugsitz (1, 15, 15', 15") nach einem der Ansprüche 6-8 oder eine Ausrüstung nach Anspruch 9 oder 10 umfasst.

12. Verfahren zum Aktivieren des Aufblasens eines Luftsacks (23, 23') eines aufblasbaren Kopfrückhaltesystems (3, 3') nach einem der Ansprüche 1-5, wobei das Verfahren Folgendes umfasst:
- Detektieren einer Kollision mittels eines Kollisionsdetektionssystems (47) eines Fahrzeugs (45),
- Übertragen eines Aktivierungssignals für den Luftsack (23, 23'),
- Aktivieren des Aufblasens des Luftsacks (23, 23'), wenn das Aktivierungssignal empfangen wird.

13. Verfahren nach Anspruch 12 wobei das Aktivierungssignal zwischen dem Kollisionsdetektionssystem (47) und dem aufblasbaren Kopfrückhaltesystem (3, 3') drahtlos übertragen wird.

## Revendications

1. Système de retenue de tête gonflable (3, 3'), comprenant
- un airbag gonflable (23, 23'), et
- un boîtier (5) pour y ranger ledit airbag (23, 23') dans un état comprimé,
ledit boîtier (5) est adapté à être placé derrière l'arrière d'une tête (21) et/ou une nuque (30) d'un utilisateur dudit système de retenue de tête gonflable (3, 3'), et
ledit airbag (23, 23') comprend une partie (27, 37) adaptée à envelopper au moins partiellement ladite tête, lorsque ledit airbag (23, 23') se trouve dans un état gonflé, de manière à retenir ladite tête (21) en empêchant son mouvement dans une direction s'écartant dudit boîtier (5),
ledit système de retenue de tête (3, 3') est adapté à retenir ladite tête pour empêcher son mouvement vers l'avant, si ledit utilisateur fait face vers l'avant, et à retenir ladite tête pour empêcher son mouvement vers l'arrière, si ledit utilisateur fait face vers l'arrière,
ledit boîtier (5) est adapté à être intégré à un dossier (35) d'un siège (15', 15") de véhicule ou ledit boîtier (5) forme un appui-tête adapté à faire partie d'un siège (1, 15) de véhicule, **caractérisé en ce que** ledit airbag (23, 23') est adapté à se gonfler suivant une trajectoire passant au-dessus de ladite tête (21).

2. Système de retenue de tête gonflable (3') selon la revendication 1, dans lequel ladite partie dudit airbag (23') est adaptée à envelopper au moins partiellement un menton (41), une joue et/ou un front (29) de ladite tête (21) dudit utilisateur, lorsque ledit airbag (23') se trouve dans un état gonflé, de manière à retenir ladite tête (21) pour empêcher son mouvement dans une direction s'écartant dudit boîtier (5).

3. Système de retenue de tête gonflable (3, 3') selon l'une quelconque des revendications précédentes, lequel système de retenue de tête gonflable (3, 3') comprend au moins une sangle ou un tissu (39) adapté(e) à s'étendre entre ledit boîtier (5) et ledit airbag (23, 23'), lorsque ledit airbag (23, 23') se trouve dans un état gonflé.

4. Système de retenue de tête gonflable (3, 3') selon l'une quelconque des revendications précédentes, dans lequel ledit boîtier (5) présente la forme d'un appui-tête d'un siège (1, 15, 15', 15'') de véhicule.

5. Système de retenue de tête gonflable (3, 3') selon l'une quelconque des revendications précédentes, lequel système de retenue de tête gonflable (3, 3') comprend en outre
- un amorceur (53) destiné à amorcer le gonflage dudit airbag (23, 23'),
- un récepteur (51) destiné aux communications sans fil, ledit récepteur (51) étant connecté avec fil ou sans fil audit amorceur (53) de façon à amorcer le gonflage dudit airbag (23, 23') lorsque ledit récepteur (51) reçoit un signal d'activation.

6. Siège (1, 15, 15', 15'') de véhicule comprenant un système de retenue de tête gonflable (3, 3') selon l'une quelconque des revendications précédentes, dans lequel ledit boîtier (5) est placé derrière une position prévue d'une tête (21) et/ou d'une nuque (30) d'un utilisateur dudit siège (1, 15, 15', 15") de véhicule, ledit airbag (23, 23') dudit système de retenue de tête gonflable (3, 3') étant adapté à être gonflé à partir dudit emplacement derrière ladite position prévue de ladite tête (21) et/ou nuque (30) dudit utilisateur,
dans lequel le boîtier (5) dudit airbag (23, 23') est intégré à un dossier (7, 35) dudit siège (15', 15") de véhicule ou le boîtier (5) dudit airbag (23, 23') forme un appui-tête, lequel fait partie dudit siège (1, 15) de véhicule, ledit airbag (23, 23') étant adapté à se gonfler suivant une trajectoire passant au-dessus de ladite tête (21).

7. Siège de véhicule selon la revendication 6, dans lequel une position dudit boîtier (5) est réglable par rapport à un dossier (7, 35) compris dans ledit siège (1, 15) de véhicule, par ex. grâce au fait que ledit boîtier (5) comprend au moins une tige (9a, 9b), de préférence deux tiges (9a, 9b), déplaçable(s) linéairement par rapport audit dossier (7, 35) par déplacement linéaire dans un canal de réception correspondant (11a, 11b) dans ledit dossier (7, 35).

8. Siège de véhicule selon l'une quelconque des revendications 6 et 7, lequel siège de véhicule est un siège détachable, par ex. un siège enfant (15, 15', 15").

9. Kit, comprenant :
- un système de retenue de tête gonflable (3, 3') selon la revendication 5, et
- un émetteur (49) adapté aux communications sans fil avec ledit récepteur (51) connecté audit amorceur (53), ledit émetteur (49) étant adapté à être connecté directement ou indirectement à un système de détection de collision (47) d'un véhicule (45).

10. Kit selon la revendication 9, lequel kit comprend en outre un siège enfant détachable (15, 15', 15"), ledit système de retenue de tête gonflable (3, 3') étant compris dans ledit siège enfant (15, 15', 15").

11. Véhicule (45), comprenant un système de détection de collision (47) destiné à détecter une collision, et le véhicule (45) comprenant en outre un système de retenue de tête gonflable (3, 3') selon l'une quelconque des revendications 1 à 5, un siège (1, 15, 15', 15") de véhicule selon l'une quelconque des revendications 6 à 8 ou un kit selon la revendication 9 ou 10.

12. Procédé d'activation du gonflage d'un airbag (23, 23') d'un système de retenue de tête gonflable (3, 3') selon l'une quelconque des revendications 1 à 5, ledit procédé comprenant
- la détection d'une collision au moyen d'un système de détection de collision (47) d'un véhicule (45),
- la transmission d'un signal d'activation pour ledit airbag (23, 23'),
- l'activation du gonflage dudit airbag (23, 23') dès réception dudit signal d'activation.

13. Procédé selon la revendication 12, dans lequel ledit signal d'activation est transmis sans fil entre ledit système de détection de collision (47) et ledit système de retenue de tête gonflage (3, 3').
